# EUROPEAN PATENT SPECIFICATION

(11) **EP 4 269 140 B1**
(45) Date of publication and mention of the grant of the patent: **12.06.2024**
(21) Application number: 22170806.8
(22) Date of filing: 29.04.2022
(51) Int. Cl.: B60H 1/00, B60H 1/32, B60K 1/00

(54) **TEMPERATURE CONTROL SYSTEM FOR A VEHICLE AND METHOD FOR OPERATING A TEMPERATURE CONTROL SYSTEM FOR A VEHICLE**
TEMPERATURSTEUERUNGSSYSTEM FÜR EIN FAHRZEUG UND VERFAHREN ZUM BETRIEB EINES TEMPERATURREGELUNGSSYSTEMS FÜR EIN FAHRZEUG
SYSTÈME DE RÉGULATION DE LA TEMPÉRATURE POUR UN VÉHICULE ET PROCÉDÉ DE FONCTIONNEMENT D'UN SYSTÈME DE RÉGULATION DE TEMPÉRATURE POUR UN VÉHICULE

(43) Date of publication of application: 01.11.2023
(73) Proprietor: Volvo Car Corporation, 40531 Göteborg (SE)
(72) Inventor: OLSEN, Hans Erik, 40531 Göteborg (SE)
(74) Representative: Maiwald GmbH

(56) References cited:
- DE-A1-102016 006 682
- DE-A1-102018 212 188
- DE-A1-102019 132 816
- DE-A1-102020 207 927
- US-A1- 2021 053 415
- US-B2- 8 635 882

## Description

The present invention relates to a temperature control system for a vehicle.

Moreover, the present invention is directed to a method for operating a temperature control system for a vehicle.

Vehicles comprise components which need to be maintained within a pre-defined temperature range during the operation of the vehicle.

For a vehicle comprising an internal combustion engine, these components for example include the combustion engine and the passenger compartment.

For a vehicle comprising an electric drive system and a corresponding battery unit, also the electric drive system and the battery unit form part of the components that need to be maintained within a pre-defined temperature range.

Depending on the operational situation of the vehicle, it may be necessary to heat or cool the above mentioned components. This means that, depending on the operational situation of the vehicle, it may be necessary to deliver heat to one or more of the above-mentioned components. At the same time it may be necessary to withdraw heat from one or more of the above-mentioned components, i.e. to cool the component.

This is done using a temperature control system, i.e. a system which is configured to selectively heat or cool components of the vehicle.

On the one hand such temperature control systems need to be sufficiently performant in order to reliably keep the above-mentioned components in the pre-defined temperature range. On the other hand, such temperature control systems need to be efficient in operation and structurally simple, i.e. be made of as few parts a possible.

Temperature control systems according to the preamble of claim 1 are for example known from US 8 635 882 B2 or DE 10 2018 212 188 A1.

It is an objective of the present invention to solve or at least alleviate this conflict of objectives and provide an improved temperature control system.

The problem is at least partially solved or alleviated by the subject matter of the independent claim of the present invention, wherein further examples are incorporated in the dependent claims.

According to a first aspect, there is provided a temperature control system for a vehicle. The temperature control system comprises a first coolant loop with a first heat exchanger being configured to exchange heat with a first part of the vehicle and being arranged fluidically between a first inlet and a first outlet. Moreover, the temperature control system comprises a second coolant loop with a second heat exchanger being configured to exchange heat with a second part of the vehicle and being arranged fluidically between a second inlet and a second outlet. Furthermore, the temperature control system comprises a coolant heating loop with a conduit portion being thermally coupled to a condenser of a heat pump unit being configured to selectively heat the coolant. The conduit portion is fluidically arranged between a coolant heating inlet and a coolant heating outlet. The temperature control system also comprises a coolant chilling loop with a conduit portion being thermally coupled to an evaporator of the heat pump unit being configured to selectively chill the coolant. The conduit portion is fluidically arranged between a coolant chilling inlet and a coolant chilling outlet. The first inlet, the second inlet, the coolant heating inlet, the coolant chilling inlet, the first outlet, the second outlet, the coolant heating outlet, and the coolant chilling outlet are coupled to a valve unit. The valve unit is configured to selectively fluidically connect or fluidically disconnect at least one of the coolant heating loop and the coolant chilling loop to at least one of the first coolant loop and the second coolant loop. Additionally, the first coolant loop and the second coolant loop are coupled via two inter loop connection lines. Thus, using the heat pump and the corresponding coolant heating loop and the corresponding coolant chilling loop, heat can be selectively transferred form the first coolant loop to the second coolant loop or from the second coolant loop to the first coolant loop. In other words, heat can be withdrawn from the one out of the first and second coolant loop being fluidically connected to the coolant chilling loop and heat can be fed to the one out of the first and second coolant loop being fluidically connected to the coolant heating loop. The direction of the heat transfer can be simply and reliably adapted to the operational needs by switching the valve unit accordingly. Using the two inter loop connection lines, a certain amount of coolant flows from the first one out of the first coolant loop and the second coolant loop into the second one out of the first coolant loop and the second coolant loop. The same amount of coolant flows into the opposite direction, i.e. from the second one out of the first coolant loop and the second coolant loop into the first one out of the first coolant loop and the second coolant loop. Thus, the amount of coolant in each of the first coolant loop, the second coolant loop and the third coolant loop stays the same. By exchanging coolant of different temperature between a pair of coolant loops, an intermediate temperature level may be generated. Consequently, the parts of the vehicle being associated with the respective first or second coolant loop can be maintained within a desired temperature range. It is noted that the first coolant loop and the second coolant loop are not connected via a heat exchanger but via the heat pump. Such a temperature control system is structurally simple. At the same time it is efficient since heat can be transferred from one of the first and second coolant loop to the other one of the first and second coolant loop in an efficient manner using the heat pump.

It is noted that in the present invention, the term coolant is used for a flowable material, e.g. a liquid, being used for transferring heat. Thus, the term coolant is also used for a flowable material which is used for heating a part of the vehicle.

It is further noted that the coolant flowing in the first coolant loop, the second coolant loop, the coolant heating loop and the coolant chilling loop is not subject to a phase change. In contrast thereto, the heat pump may use a process including a phase change, such as a Carnot process.

In an example, a coolant pump is provided in each of the first coolant loop and the second coolant loop. Consequently, the coolant may reliably circulate through the first coolant loop and the second coolant loop thereby making sure that the desired transfer of heat effectively takes place. Also in at least one of the coolant heating loop and the coolant chilling loop a heat pump may be provided for the same purpose.

In an example, the temperature control system may further comprise a third coolant loop with a third heat exchanger being configured to exchange heat with a third part of the vehicle and being arranged fluidically between a third inlet and a third outlet. The third inlet and the third outlet are coupled to the valve unit. The valve unit is configured to selectively fluidically connect or fluidically disconnect the coolant heating loop or the coolant chilling loop to the third coolant loop. Thus, it is possible to also selectively withdraw heat from the coolant in the third coolant loop or provide heat to the coolant in the third control loop. As before, the connections can be chosen depending on the operational situation such that the parts of the vehicle being associated with the respective first, second or third coolant loop can be maintained within a desired temperature range.

In an example, the temperature control system may further comprise a radiator loop being configured to exchange heat with an environment. The radiator loop has a radiator inlet, a radiator outlet and a coolant-to-air heat exchanger being fluidically arranged between the radiator inlet and the radiator outlet. At least one of the radiator inlet and the radiator outlet is coupled to at least one of the valve unit, the first coolant loop, the second coolant loop and the third coolant loop. Thus, using the radiator loop and the corresponding coolant-to-air heat exchanger, heat can be selectively exchanged between coolant flowing in the radiator loop and the environment. For example, heat may be transferred from the coolant to the environment. Put otherwise, the coolant may be cooled using the coolant-to-air heat exchanger. Alternatively, heat may be transferred from the environment to the coolant. Thus, the coolant may be heated using the coolant-to-air heat exchanger. Both alternatives are helpful for keeping the parts of the vehicle within the desired temperature range respectively.

It is noted that the coolant-to-air heat exchanger needs to be in thermally conductive contact with the environment in order to be able to exchange heat between the coolant and the environment. However, in an example, the coolant-to-air heat exchanger may be equipped with means to selectively separate the coolant-to-air heat exchanger from the environment. Such means are useful for situations in which a heat exchange between the coolant and the environment is not desired. In such situations, these means enhance the efficiency of the temperature control system. The means for example comprise a movable flap or cover for selectively opening or shutting an air intake of the coolant-to-air heat exchanger.

In an example, at least one of the first coolant loop, the second coolant loop and the third coolant loop comprises a bypass line which bypasses at least one of the first heat exchanger, the second heat exchanger and the third heat exchanger respectively. Thus, depending on the operational situation of the vehicle, coolant may bypass the heat exchanger by flowing through the bypass line. In such a case, the coolant will not exchange heat with the part of the vehicle being associated with the heat exchanger. This offers a further means for controlling the temperature of the coolant and, thus, the temperature of the part of the vehicle being associated with the first, second or third heat exchanger. Consequently, the parts of the vehicle can be kept within the pre-defined temperature range respectively.

In an example, a proportional bypass valve is connected to the at least one bypass line for controlling a coolant flow in the bypass line. In such a case, a portion of the coolant in the respective first, second or third coolant loop may flow through the bypass line while another portion flows through the corresponding first, second or third heat exchanger. Consequently, the heat exchange between the first, second or third heat exchanger and the corresponding part of the vehicle can be fine-tuned such that the part of the vehicle can be kept within a pre-defined temperature range. In this context, the coolant being located in the portion of the first, second or third coolant loop which comprises the first second or third heat exchanger respectively, may have a different temperature than the coolant being located in the bypass line. In other words, two different temperature levels may be created within at least one of the first, second or third coolant loop. At the exit of the bypass line, the coolant portions of different temperature mix and, thus, will have a third temperature level.

In an example, at least one of the first coolant loop, the second coolant loop and the third coolant loop comprises a recirculation line for recirculating coolant through at least one of the first heat exchanger, the second heat exchanger and the third heat exchanger respectively. Using the recirculation line, coolant which has already circulated through the first, second or third heat exchanger may be forced to circulate again through the first, second or third heat exchanger. This constitutes another possibility to fine-tune the temperature of the part of the vehicle being associated with the first, second or third heat exchanger.

In an example, a proportional recirculation valve is connected to the recirculation line for controlling a coolant flow in the recirculation line. Thus, the portion of the coolant recirculating through the corresponding heat exchanger may be adjusted depending on the operational situation of the vehicle. This allows to fine-tune the temperature at the respective part of the vehicle.

In an example, at least one pair out of the first coolant loop or the second coolant loop and the third coolant loop is coupled via two inter loop connection lines. Using the two inter loop connection lines, a certain amount of coolant flows from the first one out of the first coolant loop or the second coolant loop and the third coolant loop into the second one out of the first coolant loop or the second coolant loop and the third coolant loop. The same amount of coolant flows into the opposite direction, i.e. from the second one out of the first coolant loop or the second coolant loop and the third coolant loop into the first one out of the first coolant loop or the second coolant loop and the third coolant loop. Thus, the amount of coolant in each of the first coolant loop or the second coolant loop and the third coolant loop stays the same. By exchanging coolant of different temperature between a pair of coolant loops out of the first coolant loop or the second coolant loop and the third coolant loop, an intermediate temperature level may be generated.

In an example, a proportional connection valve is connected to each of the inter loop connection lines for controlling a coolant flow in the respective inter loop connection line. Consequently, the amount of coolant being exchanged between the pair of coolant loops out of the first coolant loop, the second coolant loop and the third coolant loop may be adapted. Thus, the intermediate temperature level may be adjusted to a comparatively narrow temperature range.

In an example, the coolant heating loop comprises an electric coolant heater. Using the electric coolant heater, additional heat may be supplied to the coolant if needed. This heat is additional to the heat being withdrawn from the coolant in the coolant chilling loop by the heat pump. Thus, coolant of a comparatively high temperature may be provided, if needed.

In an example, the evaporator and the condenser form part of a heat pump coolant circuit of the heat pump unit. This means that the evaporator and the condenser form part of the same heat pump coolant circuit. The heat pump coolant circuit may additionally comprise a coolant pump and a restriction or throttling device in order to provide the heat pumping functionality. Thus, heat may be efficiently transferred from the coolant chilling loop to the coolant heating loop.

In an example, at least one of the first coolant loop, the second coolant loop, the third coolant loop, the coolant heating loop and the coolant chilling loop is filled with a first coolant and the heat pump coolant circuit is filled with a second coolant being different from the first coolant. The first coolant is for example a mixture of water and an alcohol such as glycol. The second coolant may be for example ammonia, propane or carbon dioxide. Consequently, a performant coolant may be chosen for the heat pump. Thus, the heat pump may be able to bridge a wide temperature interval. At the same time potentially noxious or otherwise harmful coolants can be limited to the heat pump unit. Within a vehicle, the heat pump unit can be located such that even in case of a leakage of the second coolant no risk for the users of the vehicle occur. Thus, the temperature control system may be operated in a safe manner.

In an example, the heat pump unit comprises an encapsulation. The encapsulation is configured to collect coolant used in the heat pump unit in a leakage event. Thus, an undesired loss of coolant is prevented. This further enhances operational safety of the temperature control system.

In an example, at least one of the first coolant loop, the second coolant loop and the third coolant loop is at least one of a drive system temperature control loop, a battery system temperature control loop and a compartment temperature control loop. A drive system of the vehicle may be attributed to the drive system temperature control loop. Thus, the drive system may be maintained within a pre-defined temperature range. The drive system may comprise at least one electric machine if the vehicle is a battery electric vehicle. A battery system may be attributed to the battery system temperature control loop. Thus, the battery system may be maintained within a pre-defined temperature range. A passenger compartment of the vehicle may be attributed to the compartment temperature control loop. Thus, the passenger compartment may be maintained within a pre-defined temperature range which is comfortable for the passengers.

It is noted that in a case in which the vehicle comprises a battery system and an internal combustion engine the vehicle may also be designated as a hybrid electric vehicle. In a case in which the vehicle comprises a battery system but no internal combustion engine, the vehicle may be designated as a battery electric vehicle.

According to a second aspect, there is provided a method for operating a temperature control system for a vehicle according to the present invention. The method comprises:
- fluidically connecting the first inlet to the coolant chilling outlet, the first outlet to the coolant chilling inlet, the second inlet to the coolant heating outlet, the second outlet to the coolant heating inlet, and transferring heat from the first coolant loop to the second coolant loop by operating the heat pump unit, or
- fluidically connecting the first inlet to the coolant heating outlet, the first outlet to the coolant heating inlet, the second inlet to the coolant chilling outlet, the second outlet to the coolant chilling inlet, and transferring heat from the second coolant loop to the first coolant loop by operating the heat pump unit, and
- fluidically connecting the first coolant loop and the second coolant loop via two inter loop connection lines such that coolant of different temperature is exchanged between the first coolant loop and the second coolant loop.

Thus, using this method, heat can be transferred from the first coolant loop to the second coolant loop or from the second coolant loop to the first coolant loop as a function of an operational situation of the vehicle. By fluidically connecting the first coolant loop and the second coolant loop via two inter loop connection lines, an intermediate temperature level may be created which lies between the temperature level of the coolant heating loop and the coolant chilling loop. This allows to maintain the parts of the vehicle being associated with the respective first coolant loop and the respective second coolant loop within a pre-defined

Using the temperature control system according to the present invention and the method according to the present invention, it is possible to maintain a passenger compartment of the vehicle in which the temperature control system is installed at approximately 20 degrees Celsius. The battery system of the vehicle can be kept at a temperature between -10 and +50 degrees Celsius in a first example. In a second example, the battery system of the vehicle can be kept at a temperature over 60 degrees Celsius. The mechanical components of a drive system can be kept between -30 and +130 degrees Celsius. The electronic components of the drive system can be kept between -50 and + 65 degrees Celsius. In an example, the electronic components of the drive system may be arranged in the same coolant loop as the battery system.

A heat pump unit being used in the temperature control system according to the present invention may be configured to operate within the temperature range of -30 to +80 degrees Celsius in a first example. In a second example, the heat pump unit being used in the temperature control system according to the present invention may be configured to operate within the temperature range of -30 to +100 degrees Celsius.

It is noted that it is, of course, possible to use other temperature ranges than mentioned below. This can be realized by changing one or more components of the temperature control system according to the present invention. Moreover, a different first coolant may be used. Alternatively or additionally, a different second coolant may be used.

These and other aspects of the present invention will become apparent from and elucidated with reference to the examples described hereinafter.

Examples of the invention will be described in the following with reference to the following drawings.
- Figure 1: shows a temperature control system according to the present invention which can be operated with a method according to the present invention,
- Figure 2: shows a proportional bypass valve and a proportional recirculation valve of the temperature control system of Figure 1 in more detail,
- Figure 3: shows a series connection valve of the temperature control system of Figure 1 in more detail, and
- Figures 4 to 11: show alternative configurations of a valve unit of the temperature control system of Figure 1.

The figures are merely schematic representations and serve only to illustrate examples of the invention. Identical or equivalent elements are in principle provided with the same reference signs.

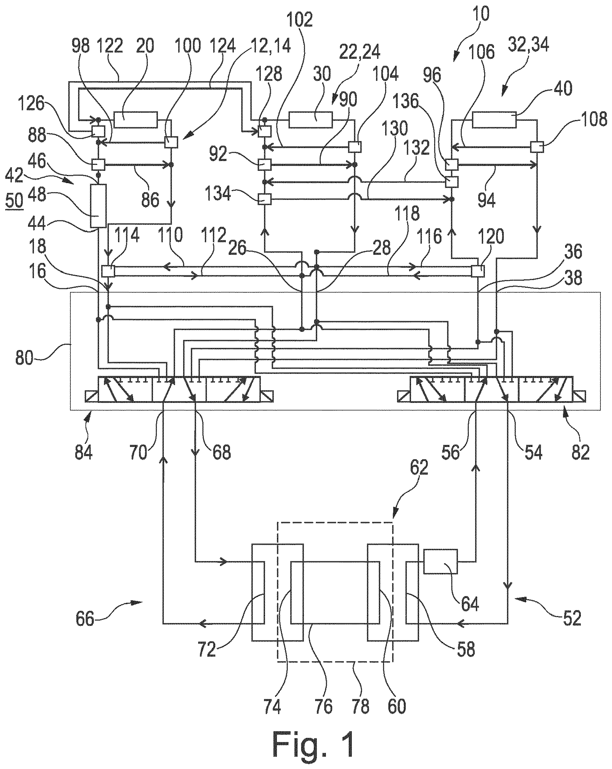

Figure 1 shows a temperature control system 10 for a vehicle.

The temperature control system 10 comprises a first coolant loop 12.

In the example shown in the Figures, the first coolant loop 12 is a drive system temperature control loop 14.

In the following the terms first coolant loop 12 and drive system temperature control loop 14 will be used as synonyms.

The first coolant loop 12 comprises a first inlet 16 and a first outlet 18.

Moreover, the first coolant loop 12 comprises a first heat exchanger 20.

The first heat exchanger 20 is fluidically arranged between the first inlet 16 and the first outlet 18.

The first heat exchanger 20 is configured to exchange heat with a first part of the vehicle which in the present example is a drive system, i.e. a system comprising electric drive machines.

The first coolant loop 12 is filled with a first coolant which is a mixture of water and glycol in the present example.

Furthermore, the temperature control system 10 comprises a second coolant loop 22.

In the example shown in the Figures, the second coolant loop 22 is a battery system temperature control loop 24.

In the following the terms second coolant loop 22 and battery system temperature control loop 24 will be used as synonyms.

The second coolant loop 22 comprises a second inlet 26 and a second outlet 28.

Moreover, the second coolant loop 22 comprises a second heat exchanger 30.

The second heat exchanger 30 is fluidically arranged between the second inlet 26 and the second outlet 28.

The second heat exchanger 30 is configured to exchange heat with a second part of the vehicle which in the present example is a battery system.

Also the second coolant loop 22 is filled with the first coolant which is a mixture of water and glycol in the present example.

Additionally, the temperature control system 10 comprises a third coolant loop 32.

In the example shown in the Figures, the third coolant loop 32 is a compartment temperature control loop 34.

In the following the terms third coolant loop 32 and compartment temperature control loop 34 will be used as synonyms.

The third coolant loop 32 comprises a third inlet 36 and a third outlet 38.

Moreover, the third coolant loop 32 comprises a third heat exchanger 40.

The third heat exchanger 40 is fluidically arranged between the third inlet 36 and the third outlet 38.

The third heat exchanger 40 is configured to exchange heat with a third part of the vehicle which in the present example is a passenger compartment.

Also the third coolant loop 32 is filled with the first coolant which is a mixture of water and glycol in the present example.

Furthermore, the temperature control system 10 comprises a radiator loop 42.

The radiator loop comprises a radiator inlet 44 and a radiator outlet 46.

Fluidically between the radiator inlet 44 and the radiator outlet 46, a coolant-to-air heat exchanger 48 is arranged which is configured to exchange heat between coolant and an environment 50. This means that the coolant-to-air heat exchanger 48 can either pick up heat from the environment 50 or deliver heat to the environment 50. This, of course, depends on the operational situation of the vehicle and on the temperature of the environment 50.

In the present example, the radiator loop 42 is connected in series with the first coolant loop 12.

Thus, also the radiator loop 42 is filled with the first coolant which is a mixture of water and glycol in the present example.

The temperature control system also comprises a coolant heating loop 52.

In the present example, also the coolant heating loop 52 is filled with the first coolant which is a mixture of water and glycol.

The coolant heating loop 52 has coolant heating inlet 54 and a coolant heating outlet 56.

Between the coolant heating inlet 54 and the coolant heating outlet 56, there is provided a conduit portion 58 being thermally coupled to a condenser 60 of a heat pump unit 62. The condenser 60 is configured to selectively heat the first coolant.

Moreover, the coolant heating loop 52 comprises an electric coolant heater 64 which is also configured to heat the first coolant.

The temperature control system 10 also has a coolant chilling loop 66.

In the present example, also the coolant chilling loop 66 is filled with the first coolant which is a mixture of water and glycol.

The coolant chilling loop 66 has a coolant chilling inlet 68 and a coolant chilling outlet 70.

Between the coolant chilling inlet 68 and the coolant chilling outlet 70 there is provided a conduit portion 72 being thermally coupled to an evaporator 74 of the heat pump unit 62.

The evaporator 74 is configured to selectively chill the first coolant.

The heat pump unit 62 comprises a heat pump coolant circuit 76 comprising the condenser 60 and the evaporator 74. The heat pump coolant circuit 76 is filled with a second coolant being different from the first coolant. The second coolant is ammonia in the present example.

In order to prevent the second coolant from entering the environment 50 in case of a leakage in the heat pump coolant circuit 76, the heat pump unit 62 comprises an encapsulation 78 which is represented schematically only in Figure 1.

It is noted that the first heat exchanger 20, the second heat exchanger 30, the third heat exchanger 40 and the coolant-to-air heat exchanger 48 may be considered to be representative of a heat exchanger system respectively. Such a heat exchanger system may comprise a plurality of heat exchangers being connected in parallel and/or in series.

Moreover, each of the first coolant loop 12, the second coolant loop 22, the third coolant loop 32, the coolant heating loop 52, and the coolant chilling loop 66 may comprise a coolant pump. For better visibility, the pumps are not represented in Figure 1.

The temperature control system 10 also comprises a valve unit 80.

The first inlet 16, the second inlet 26, the third inlet 36, the coolant heating inlet 54, the coolant chilling inlet 68, the first outlet 18, the second outlet 28, the third outlet 38, the coolant heating outlet 56, and the coolant chilling outlet 70 are coupled to the valve unit 80.

The valve unit 80 is configured to selectively fluidically connect or fluidically disconnect at least one of the coolant heating loop 52 and the coolant chilling loop 66 to at least one of the first coolant loop 12, the second coolant loop 22, and the third coolant loop 32.

To this end, the valve unit 80 comprises a heating connection valve 82.

Using the heating connection valve 82, each of the first coolant loop 12, the second coolant loop 22 and the third coolant loop 32 can be selectively connected to the coolant heating loop 52.

The valve unit 80 also comprises a chilling connection valve 84.

Using the chilling connection valve 84, each of the first coolant loop 12, the second coolant loop 22 and the third coolant loop 32 can be selectively connected to the coolant chilling loop 66.

Thus, heat from any one of the first coolant loop 12, the second coolant loop 22 and the third coolant loop 32 may be transferred to any other one of the first coolant loop 12, the second coolant loop 22 and the third coolant loop 32 using the heat pump unit 62. This will be explained in more detail further below.

Each of the first coolant loop 12, the second coolant loop 22 and the third coolant loop 32 additionally comprises a bypass line which bypasses the corresponding heat exchanger.

In more detail, the first coolant loop 12 comprises a first bypass line 86 which bypasses the first heat exchanger 20.

A first proportional bypass valve 88 is connected to the first bypass line 86 such that a portion of coolant bypassing the first heat exchanger 20 can be adjusted.

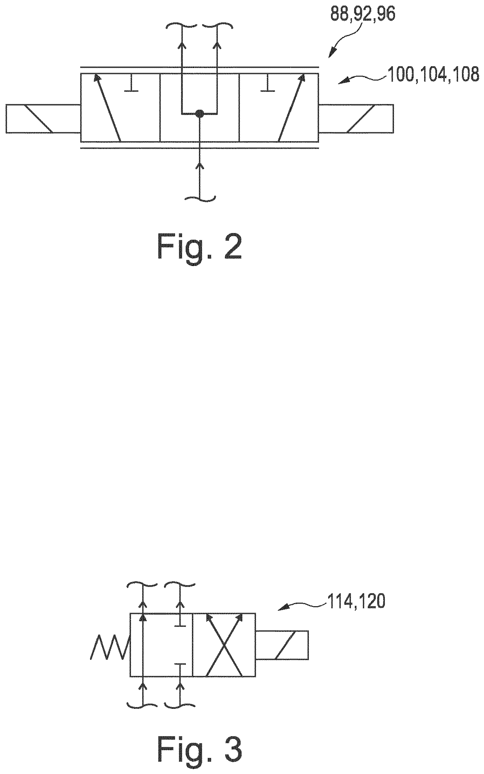

The first proportional bypass valve 88 is represented in detail in Figure 2.

Also the second coolant loop 22 comprises a second bypass line 90 which bypasses the second heat exchanger 30.

A second proportional bypass valve 92 is connected to the second bypass line 90 such that a portion of coolant bypassing the second heat exchanger 30 can be adjusted.

The second proportional bypass valve 92 is represented in detail in Figure 2.

Moreover, the third coolant loop 32 comprises a third bypass line 94 which bypasses the third heat exchanger 40.

A third proportional bypass valve 96 is connected to the third bypass line 94 such that a portion of the coolant bypassing the third heat exchanger 40 can be adjusted.

The third proportional bypass valve 96 is represented in detail in Figure 2.

Furthermore, each of the first coolant loop 12, the second coolant loop 22 and the third coolant loop 32 comprises a recirculation line which allows at least a portion of the first coolant to circulate at least a second time through the corresponding heat exchanger.

In more detail, the first coolant loop 12 comprises a first recirculation line 98 for recirculating first coolant through the first heat exchanger 20.

A first proportional recirculation valve 100 is connected to the first recirculation line 98 such that a portion of the first coolant recirculating through the first recirculation line 98 and, thus, through the first heat exchanger 20 can be adjusted.

The first proportional recirculation valve 100 is represented in more detail in Figure 2.

Moreover, the second coolant loop 22 comprises a second recirculation line 102 for recirculating first coolant through the second heat exchanger 30.

A second proportional recirculation valve 104 is connected to the second recirculation line 102 such that a portion of the first coolant recirculating through the second recirculation line 102 and, thus, through the first heat exchanger 30 can be adjusted.

The second proportional recirculation valve 104 is represented in more detail in Figure 2.

Additionally, the third coolant loop 32 comprises a third recirculation line 106 for recirculating first coolant through the third heat exchanger 40.

A third proportional recirculation valve 108 is connected to the third recirculation line 106 such that a portion of the first coolant recirculating through the third recirculation line 106 and, thus, through the third heat exchanger 40 can be adjusted.

The third proportional recirculation valve 108 is represented in more detail in Figure 2.

The first coolant loop 12 and the second coolant loop 22 are additionally connected via a first series connection line 110 and a second series connection line 112. The first series connection line 110 and the second series connection line 112 are connected to the first coolant loop 12 via a first series connection valve 114.

Thus, using the first series connection line 110, the second series connection line 112 and the first series connection valve 114, the first coolant loop 12 and the second coolant loop 22 can be connected in series.

The first series connection valve 114 is represented in more detail in Figure 3.

It is noted that even though the first series connection line 110, the second series connection line 112 and the first series connection valve 114 are represented outside the valve unit 80 in Figure 1, it is, of course possible, that the first series connection line 110, the second series connection line 112 and the first series connection valve 114 form part of the valve unit 80.

Moreover, the second coolant loop 22 and the third coolant loop 32 are connected via a third series connection line 116 and a fourth series connection line 118. The third series connection line 116 and the fourth series connection line 118 are connected to the third coolant loop 32 via a second series connection valve 120.

Thus, using the third series connection line 116, the fourth series connection line 118 and the second series connection valve 120, the second coolant loop 22 and the third coolant loop 32 can be connected in series.

The second series connection valve 120 is represented in more detail in Figure 3.

It is noted that even though the third series connection line 116, the fourth series connection line 118 and the second series connection valve 120 are represented outside the valve unit 80 in Figure 1, it is, of course possible, that the third series connection line 116, the fourth series connection line 118 and the second series connection valve 120 form part of the valve unit 80.

In addition to the first series connection line 110 and the second series connection line 112, the first coolant loop 12 and the second coolant loop 22 are also connected via a first inter loop connection line 122 and a second inter loop connection line 124.

A first proportional connection valve 126 is connected to the first inter loop connection line 122 and a second proportional connection valve 128 is connected to the second inter loop connection line 124.

The first proportional connection valve 128 and the second proportional connection valve 128 are represented in more detail in Figure 2.

It is noted that both in the first coolant loop 12 and the second coolant loop 22 the inter loop connection is located upstream of the first heat exchanger 20 and the second heat exchanger 30 respectively.

Using the first inter loop connection line 122 with the first proportional connection valve 126 and the second inter loop connection line 124 with the second proportional connection valve 128, first coolant can be exchanged between the first coolant loop 12 and the second coolant loop 22. If the exchanged first coolant is of different temperatures, an intermediate temperature level can be generated by mixing coolant from the first coolant loop 12 and the second coolant loop 22.

Moreover, the second coolant loop 22 and the third coolant loop 32 are connected via a third inter loop connection line 130 and a fourth inter loop connection line 132.

A third proportional connection valve 134 is connected to the third inter loop connection line 130 and a fourth proportional connection valve 136 is connected to the fourth inter loop connection line 132.

The third proportional connection valve 134 and the fourth proportional connection valve 136 are represented in more detail in Figure 2.

It is noted that both in the second coolant loop 22 and the third coolant loop 32 the inter loop connection is located upstream of the second heat exchanger 30 and the third heat exchanger 40 respectively.

Using the third inter loop connection line 130 with the third proportional connection valve 134 and the fourth inter loop connection line 132 with the fourth proportional connection valve 136, first coolant can be exchanged between the second coolant loop 22 and the third coolant loop 32. If the exchanged first coolant is of different temperatures, an intermediate temperature level can be generated by mixing coolant from the second coolant loop 22 and the third coolant loop 32.

The temperature control system 10 may be operated using a method for operating the temperature control system 10.

Using this method, the coolant chilling loop 66 can be connected to any one of the first coolant loop 12, the second coolant loop 22 or the third coolant loop 32 or any subgroup thereof. Thereby, heat can be selectively picked up from the first coolant loop 12, the second coolant loop 22 or the third coolant loop 32 or any subgroup thereof.

The coolant heating loop 52 can also be connected to any one of the first coolant loop 12, the second coolant loop 22 or the third coolant loop 32 or any subgroup thereof. Thereby, heat can be selectively provided to the first coolant loop 12, the second coolant loop 22 or the third coolant loop 32 or any subgroup thereof.

More generally speaking, heat can be picked up at one place within the temperature control system 10 and can be effectively and efficiently delivered to another place within the temperature control system 10 using the heat pump unit 62, the coolant heating loop 52 and the coolant chilling loop 66. In other words, the condenser 60 and the evaporator 74 of the heat pump unit 62 can be hydraulically located within the temperature control system 10 as needed in a specific operational situation of the vehicle.

Thus, the drive system of the vehicle being associated with the drive system temperature control loop 14 can be selectively heated or chilled.

The battery system of the vehicle being associated with the battery system temperature control loop 24 may be selectively heated or chilled.

Also the passenger compartment of the vehicle being associated with the compartment temperature control loop 34 can be selectively heated or chilled.

Each heating procedure can optionally be supported by the electric coolant heater 64.

However, in general using the heat sources besides the electric coolant heater 64 is preferred. This enhances the general efficiency of the vehicle since heat resulting from unavoidable losses is used for heating other components. Thus, the need to specifically produce additional heat is reduced.

The method will be further explained in connection with different use cases.

In a first use case, the first inlet 16 may be fluidically connected to the coolant chilling outlet 70 and the first outlet 18 may be fluidically connected to the coolant chilling inlet 68 by operating the chilling connection valve 84 accordingly. Thus, the first coolant loop 12 is fluidically connected to the coolant chilling loop 66. Consequently, the coolant in the first coolant loop 12 may be chilled. In other words, heat is withdrawn from the coolant circulating in the first coolant loop 12. Thus, the drive system of the vehicle serves as a heat source.

The second inlet 26 may be fluidically connected to the coolant heating outlet 56 and the second outlet 28 may be fluidically connected to the coolant heating inlet 54 by operating the heat connection valve 82 accordingly. In other words, the second coolant loop 22 is fluidically connected to the coolant heating loop 52. Consequently, the coolant in the second coolant loop 22 may be heated. As a further consequence thereof, the battery system of the vehicle may be heated. This is done by transferring heat from the first coolant loop 12 to the second coolant loop 22 by operating the heat pump unit 62.

Thus, in the first use case heat from the drive system is transferred to the battery system.

Optionally and depending on an ambient temperature, also the coolant-to-air heat exchanger 48 may be used to withdraw heat from the environment 50 as an additional heat source.

In a second use case, the first inlet 16 may be fluidically connected to the coolant heating outlet 56 and the first outlet 18 may be fluidically connected to the coolant heating inlet 54 by operating the heating connection valve 82 accordingly. Thus, the first coolant loop 12 is fluidically connected to the coolant heating loop 52. The coolant in the first coolant loop may be heated.

Moreover, the second inlet 26 may be fluidically connected to the coolant chilling outlet 70 and the second outlet 28 may be fluidically connected to the coolant chilling inlet 68 by operating the chilling connection valve 84 accordingly. In other words, the second coolant loop 22 is fluidically connected to the coolant chilling loop 66.

Consequently, using the heat pump unit 62, heat can be transferred from the battery system to the drive system of the vehicle. The drive system of the vehicle may be considered as a heat sink in this context.

Optionally, also the coolant-to-air heat exchanger 48 may be used in order to deliver heat to the environment 50. This is of course dependent on a temperature of the environment 50.

A third use case is directed to quickly deicing the coolant-to-air heat exchanger 48. To this end, the coolant-to-air heat exchanger 48 needs to be heated via the coolant. Thus, the first coolant loop 12 is fluidically connected to the coolant heating loop 52 by operating the heating connection valve 82 accordingly.

At least one of the second coolant loop 22 and the third coolant loop 32 may be fluidically connected to the coolant chilling loop 66 and provide the heat which is transferred to the first coolant loop 12 using the heat pump unit 62.

Optionally, also the electric coolant heater 64 may be used to further heat the coolant and allow for quick deicing. This is especially useful, if the third coolant loop 32 is connected to the coolant chilling loop 66 and at the same time a temperature drop in the passenger compartment being thermally connected to the third heat exchanger 40 of the third coolant loop 32 is undesired.

In a case in which the coolant-to-air heat exchanger 48 comprises means to selectively separate the coolant-to-air heat exchanger 48 from the environment 50, e.g. a shutter, it is helpful to effectively separate the coolant-to-air heat exchanger 48 from the environment 50 while deicing.

Further optionally, the first bypass line 86 may be fully opened using the first proportional bypass valve 88. At the same time, the first heat exchanger 20 may be fluidically disconnected from the remaining parts of the first coolant loop 12 using the first proportional bypass valve 88. Consequently, no heat is transferred to the first heat exchanger 20 and all heat is used to deice the coolant-to-air heat exchanger 48.

It is noted that the first coolant loop 12, especially the coolant-to-air heat exchanger 48 being comprised by the first coolant loop 12 in the present example, may be switched very quickly from a state in which the first coolant loop 12, and thus the coolant-to-air heat exchanger 48, is fluidically connected to the coolant chilling loop 66 to a state in which the first coolant loop 12, and thus the coolant-to-air heat exchanger 48, is fluidically connected to the coolant heating loop 52 as has been described above in the context of the third use case. The same is true when switching from a state in which the first coolant loop 12, and thus the coolant-to-air heat exchanger 48, is fluidically connected to the coolant heating loop 52 to a state in which the first coolant loop 12, and thus the coolant-to-air heat exchanger 48, is fluidically connected to the coolant chilling loop 66.

The switching between the above-mentioned states may be performed in an alternating manner. Such that deicing of the coolant-to-air heat exchanger 48 and a heat exchange between the coolant-to-air heat exchanger 48 and the environment 50 take place in a temporally alternating manner. A corresponding switching interval may be comparatively short, i.e. between 30 seconds and 5 minutes. An exemplary switching interval is one minute.

If such a comparatively short switching intervals are used or if generally, the third use case is only used for a comparatively short time period, the heat exchange in the remaining coolant loops, especially the second coolant loop 22 and the third coolant loop 32 is only affected to a very minor extent by the performance of a deicing activity applying the third use case.

Furthermore, using comparatively short switching intervals or applying the third use case only for a short time period is advantageous for the operation of the heat pump unit 62. The operational state of the heat pump unit 62 does not necessarily need to be changed except for the switching of the heating connection valve 82 and the chilling connection valve 84. Especially, a coolant pump forming part of the heat pump unit 62 can be operated in a continuous manner, i.e. it does not need to change its operational mode. Moreover, the thermal mass which needs to be switched is comparatively low.

In a fourth use case, the first coolant loop 12 is fluidically connected to the coolant chilling loop 66 by operating the chilling connection valve 84 accordingly. By this measure, the temperature of the drive system of the vehicle may be kept below a temperature of the environment 50. This has the effect that no thermal losses occur between the first coolant loop and the environment 50.

In the present use case, the coolant-to-air heat exchanger 48 may be separated from the environment 50 using the means as mentioned above.

Thus, practically all heat that is produced in the drive system due to unavoidable losses can be recovered using the heat pump unit 62.

The heat can then be used to heat the battery system and/or to heat the passenger compartment. To this end, the second coolant loop 22 and/or the third coolant loop 32 needs to be connected to the coolant heating loop 52 by operating the heating connection valve 82 accordingly.

In a case in which both the second coolant loop 22 and the third coolant loop 32 shall be connected to the coolant heating loop 52, the second coolant loop 22 and the third coolant heating loop 32 may be connected in series using the third series connection line 116, the fourth series connection line 118 and the second series connection valve 120.

If needed, the electric coolant heater 64 can be used to further heat the coolant.

If desired, in the present use case, the battery system, i.e. the second heat exchanger 30 can be kept at a lower temperature as compared to the passenger compartment, i.e. the third heat exchanger 40. This can be done by bypassing at least a portion of the coolant using the second bypass line 90 and the corresponding second proportional bypass valve 92.

In a fifth use case, the passenger compartment is heated using heat from the drive system and the battery system.

In this context, the coolant heating loop 52 is fluidically connected to the third coolant loop 32 which is the compartment temperature control loop 34 by operating the heating connection valve 82 accordingly.

At least one of the first coolant loop 12 and the second coolant loop 22 is fluidically connected to the coolant chilling loop 66 by operating the chilling connecting valve 84 accordingly.

In a case in which both the first coolant loop 12 and the second coolant loop 22 are fluidically connected to the chilling loop 66, they can be fluidically connected using the first series connection line 110, the second series connection line 112 and the first series connection valve 114.

In a sixth use case the battery system shall be chilled. Thus, again, the second coolant loop 22 which is the battery system temperature control loop 24 needs to be fluidically connected to the coolant chilling loop 66 by operating the chilling connecting valve 84 accordingly.

Using the heat pump unit 62, the heat withdrawn from the battery system using the second heat exchanger 30 can be transferred to the drive system via the first heat exchanger 20 or to the passenger compartment using the third heat exchanger 40.

Alternatively or additionally the coolant-to-air heat exchanger 48 may be used to deliver heat to the environment 50.

It is noted that the drive system may also be in thermal connection with the environment 50. In such a case, the drive system may be used to additionally transfer heat to the environment 50.

In a seventh use case, the passenger compartment shall be chilled. Thus, the third coolant loop 32 is fluidically connected to the coolant chilling loop 66 by operating the chilling connecting valve 84 accordingly.

The coolant heating loop 52 is fluidically connected to at least one of the first coolant loop 12 and the second coolant loop 22 by operating the heating connecting valve 82 accordingly. Thus, heat is transferred from the passenger compartment to the battery system or the drive system via the respective first heat exchanger 20 and/or the second heat exchanger 30.

In an eighth use case, it is desired to have the first heat exchanger 20, the second heat exchanger 30 and the third heat exchanger 40 at different temperature levels respectively.

The first heat exchanger 20 being in thermal connection with the drive system of the vehicle shall be at the lowest temperature.

The third heat exchanger 40 being in thermal connection with the passenger compartment shall be at the highest temperature.

The second heat exchanger 30 being in thermal connection with the battery system shall be at an intermediate temperature.

In this use case, the first coolant loop 12 is fluidically connected to the coolant chilling loop 66 and the third coolant loop 32 is fluidically connected to the coolant heating loop 52 by operating the heating connection valve 82 and the chilling connecting valve 84 accordingly.

Also the second coolant loop 22 is fluidically connected to the coolant heating loop 52, e.g. by connecting the second coolant loop 22 and the third coolant loop 32 in series as has already been explained above.

The intermediate temperature level of the battery system is achieved by connecting the first coolant loop 12 and the second coolant loop via the first inter loop connection line 122 and the second inter loop connection line 124. To this end, the first proportional connection valve 126 and the second proportional connection valve 128 are used. Thus, coolant of different temperatures is exchanged between the first coolant loop 12 and the second coolant loop 22 thereby reducing the temperature level at the second heat exchanger 30, i.e. at the battery system, as compared to the temperature level at the third heat exchanger 40, i.e. in the passenger compartment.

It is noted that in all use cases, the first bypass line 86 may be opened using the first proportional bypass valve 88 if a temperature at the first heat exchanger 20, i.e. in the drive system has reached a desired level.

Alternatively or additionally, the second bypass line 90 may be opened using the second proportional bypass valve 92 if the temperature at the second heat exchanger 30, i.e. in the battery system has reached a desired level.

Further alternatively or additionally, the third bypass line 94 may be opened using the third proportional bypass valve 96 if the temperature at the third heat exchanger 40, i.e. in the passenger compartment has reached a desired level.

As far as the valve unit 80 and in general all the valves of the temperature control system 10 are concerned, it has to be noted that, of course, the valves represented in Figures 1 to 3 may as well be replaced by any other valve our group of valves providing the same functionality. Especially off-the-shelf valves can be used.

In the temperature control system 10 of the present disclosure different types of valves, e.g. slide valves, rotary slide valves, sliding disk valves or rotating disk valves may be used.

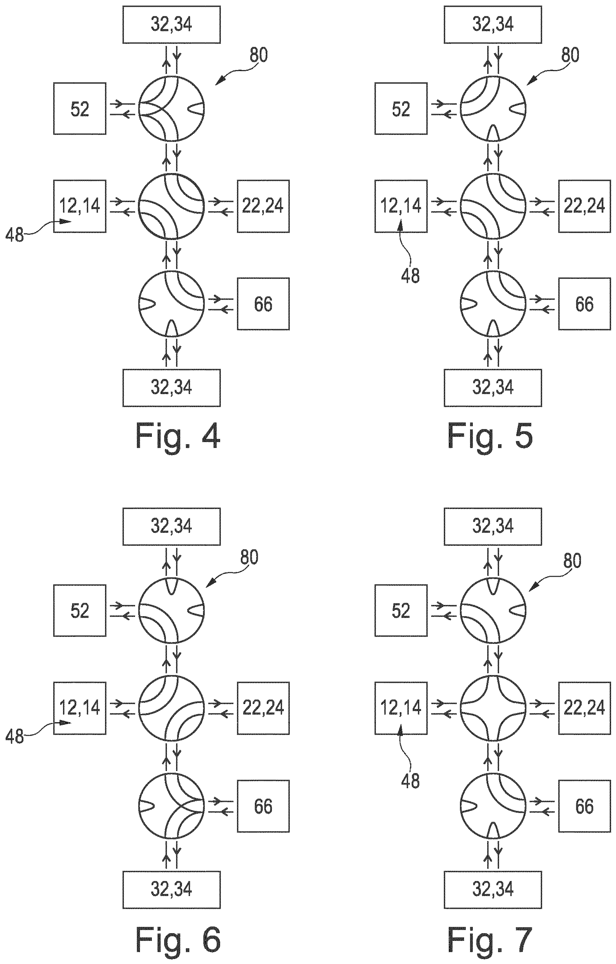

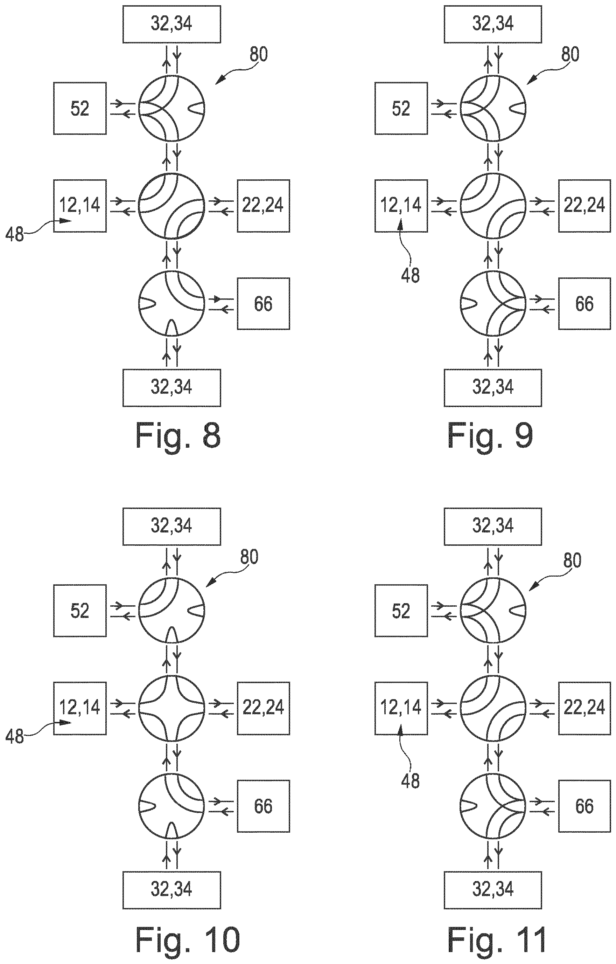

Figures 4 to 11 schematically show alternative configurations of the valve unit 80. All examples shown in Figures 4 to 11 rely on three cascaded rotating disk valves.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. Any reference signs in the claims should not be construed as limiting the scope of the claims.

### LIST OF REFERENCE SIGNS

- 10: temperature control system
- 12: first coolant loop
- 14: drive system temperature control loop
- 16: first inlet
- 18: first outlet
- 20: first heat exchanger
- 22: second coolant loop
- 24: battery system temperature control loop
- 26: second inlet
- 28: second outlet
- 30: second heat exchanger
- 32: third control loop
- 34: compartment temperature control loop
- 36: third inlet
- 38: third outlet
- 40: third heat exchanger
- 42: radiator loop
- 44: radiator inlet
- 46: radiator outlet
- 48: coolant-to-air heat exchanger
- 50: environment
- 52: coolant heating loop
- 54: coolant heating inlet
- 56: coolant heating outlet
- 58: conduit portion
- 60: condenser
- 62: heat pump unit
- 64: electric coolant heater
- 66: coolant chilling loop
- 68: coolant chilling inlet
- 70: coolant chilling outlet
- 72: conduit portion
- 74: evaporator
- 76: heat pump coolant circuit
- 78: encapsulation
- 80: valve unit
- 82: heating connection valve
- 84: chilling connection valve
- 86: first bypass line
- 88: first proportional bypass valve
- 90: second bypass line
- 92: second proportional bypass valve
- 94: third bypass line
- 96: third proportional bypass valve
- 98: first recirculation line
- 100: first proportional recirculation valve
- 102: second recirculation line
- 104: second proportional recirculation valve
- 106: third recirculation line
- 108: third proportional recirculation valve
- 110: first series connection line
- 112: second series connection line
- 114: first series connection valve
- 116: third series connection line
- 118: fourth series connection line
- 120: second series connection valve
- 122: first inter loop connection line
- 124: second inter loop connection line
- 126: first proportional connection valve
- 128: second proportional connection valve
- 130: third inter loop connection line
- 132: fourth inter loop connection line
- 134: third proportional connection valve
- 136: fourth proportional connection valve

## Claims

1. A temperature control system (10) for a vehicle, comprising
a first coolant loop (12) with a first heat exchanger (20) being configured to exchange heat with a first part of the vehicle and being arranged fluidically between a first inlet (16) and a first outlet (18),
a second coolant loop (22) with a second heat exchanger (30) being configured to exchange heat with a second part of the vehicle and being arranged fluidically between a second inlet (26) and a second outlet (28),
a coolant heating loop (52) with a conduit portion (58) being thermally coupled to a condenser (60) of a heat pump unit (62) being configured to selectively heat the coolant, wherein the conduit portion (58) is fluidically arranged between a coolant heating inlet (54) and a coolant heating outlet (56),
a coolant chilling loop (66) with a conduit portion (72) being thermally coupled to an evaporator (74) of the heat pump unit (62) being configured to selectively chill the coolant, wherein the conduit portion (72) is fluidically arranged between a coolant chilling inlet (68) and a coolant chilling outlet (70),
wherein the first inlet (16), the second inlet (26), the coolant heating inlet (54), the coolant chilling inlet (68), the first outlet (18), the second outlet (28), the coolant heating outlet (56), and the coolant chilling outlet (70) are coupled to a valve unit (80), wherein the valve unit (80) is configured to selectively fluidically connect or fluidically disconnect at least one of the coolant heating loop (52) and the coolant chilling loop (66) to at least one of the first coolant loop (12) and the second coolant loop (22),
**characterized in that** the first coolant loop (12) and the second coolant loop (22) are coupled via two inter loop connection lines (122, 124).

2. The temperature control system (10) of claim 1, further comprising a third coolant loop (32) with a third heat exchanger (40) being configured to exchange heat with a third part of the vehicle and being arranged fluidically between a third inlet (36) and a third outlet (38), wherein the third inlet (36) and the third outlet (38) are coupled to the valve unit (80), wherein the valve unit (80) is configured to selectively fluidically connect or fluidically disconnect the coolant heating loop (52) or the coolant chilling loop (66) to the third coolant loop (32).

3. The temperature control system (10) of any one of the preceding claims, further comprising a radiator loop (42) being configured to exchange heat with an environment (50), the radiator loop (42) having a radiator inlet (44), a radiator outlet (46) and a coolant-to-air heat exchanger (48) being fluidically arranged between the radiator inlet (44) and the radiator outlet (46), wherein at least one of the radiator inlet (44) and the radiator outlet (46) is coupled to at least one of the valve unit (80), the first coolant loop (12), the second coolant loop (22) and the third coolant loop (32).

4. The temperature control system (10) of any one of the preceding claims, wherein at least one of the first coolant loop (12), the second coolant loop (22) and the third coolant loop (32) comprises a bypass line (86, 90, 94) which bypasses at least one of the first heat exchanger (20), the second heat exchanger (30) and the third heat exchanger (40) respectively.

5. The temperature control system (10) of any one of the preceding claims, wherein at least one of the first coolant loop (12), the second coolant loop (22) and the third coolant loop (32) comprises a recirculation line (98, 102, 106) for recirculating coolant through at least one of the first heat exchanger (20), the second heat exchanger (30) and the third heat exchanger (40) respectively.

6. The temperature control system (10) of claim 5, wherein a proportional recirculation valve (100, 104, 108) is connected to the recirculation line (98, 102, 106) for controlling a coolant flow in the recirculation line (98, 102, 106).

7. The temperature control system (10) of any one of the preceding claims, wherein at least one pair out of the first coolant loop (12) or the second coolant loop (22) and the third coolant loop (32) is coupled via two inter loop connection lines (130, 132).

8. The temperature control system (10) of claim 7, wherein a proportional connection valve (126, 128, 134, 136) is connected to each of the inter loop connection lines (122, 124, 130, 132) for controlling a coolant flow in the respective inter loop connection line (122, 124, 130, 132).

9. The temperature control system (10) of any one of the preceding claims, wherein the coolant heating loop (52) comprises an electric coolant heater (64).

10. The temperature control system (10) of any one of the preceding claims, wherein the evaporator (74) and the condenser (60) form part of a heat pump coolant circuit (76) of the heat pump unit (62).

11. The temperature control system (10) of claim 10, wherein at least one of the first coolant loop (12), the second coolant loop (22), the third coolant loop (32), the coolant heating loop (52) and the coolant chilling loop (66) is filled with a first coolant and the heat pump coolant circuit (76) is filled with a second coolant being different from the first coolant.

12. The temperature control system (10) of any one of the preceding claims, wherein the heat pump unit (62) comprises an encapsulation (78).

13. The temperature control system (10) of any one of the preceding claims, wherein at least one of the first coolant loop (12), the second coolant loop (22) and the third coolant loop (32) is at least one of a drive system temperature control loop (14), a battery system temperature control loop (24) and a compartment temperature control loop (34).

14. A method for operating a temperature control system (10) for a vehicle according to any one of the preceding claims, comprising:
fluidically connecting the first inlet (16) to the coolant chilling outlet (70), the first outlet (18) to the coolant chilling inlet (68), the second inlet (26) to the coolant heating outlet (56), the second outlet (28) to the coolant heating inlet (54), and transferring heat from the first coolant loop (12) to the second coolant loop (22) by operating the heat pump unit (62), or
fluidically connecting the first inlet (16) to the coolant heating outlet (56), the first outlet (18) to the coolant heating inlet (54), the second inlet (26) to the coolant chilling outlet (70), the second outlet (28) to the coolant chilling inlet (68), and transferring heat from the second coolant loop (22) to the first coolant loop (12) by operating the heat pump unit (62), and
fluidically connecting the first coolant loop (12) and the second coolant loop (22) via two inter loop connection lines (122, 124) such that coolant of different temperature is exchanged between the first coolant loop (12) and the second coolant loop (22).

## Patentansprüche

1. Temperatursteuerungssystem (10) für ein Fahrzeug, umfassend umfasst:
eine erste Kühlmittelschleife (12) mit einem ersten Wärmetauscher (20), der dafür ausgelegt ist, mit einem ersten Teil des Fahrzeugs Wärme zu tauschen, und in Strömungsverbindung zwischen einem ersten Einlass (16) und einem ersten Auslass (18) angeordnet ist,
eine zweite Kühlmittelschleife (22) mit einem zweiten Wärmetauscher (30), der dafür ausgelegt ist, mit einem zweiten Teil des Fahrzeugs Wärme zu tauschen, und in Strömungsverbindung zwischen einem zweiten Einlass (26) und einem zweiten Auslass (28) angeordnet ist,
eine Kühlmittelerwärmungsschleife (52) mit einem Leitungsabschnitt (58), der thermisch mit einem Kondensator (60) einer Wärmepumpeneinheit (62) gekoppelt ist, die dafür ausgelegt ist, das Kühlmittel selektiv zu erwärmen, wobei der Leitungsabschnitt (58) in Strömungsverbindung zwischen einem Kühlmittelerwärmungseinlass (54) und einem Kühlmittelerwärmungsauslass (56) angeordnet ist,
eine Kühlmittelkühlungsschleife (66) mit einem Leitungsabschnitt (72), der thermisch mit einem Verdampfer (74) der Wärmepumpeneinheit (62) gekoppelt ist, der dafür ausgelegt ist, das Kühlmittel selektiv zu kühlen, wobei der Leitungsabschnitt (72) in Strömungsverbindung zwischen einem Kühlmittelkühlungseinlass (68) und einem Kühlmittelkühlungsauslass (70) angeordnet ist,
wobei der erste Einlass (16), der zweite Einlass (26), der Kühlmittelerwärmungseinlass (54), der Kühlmittelkühlungseinlass (68), der erste Auslass (18), der zweite Auslass (28), der Kühlmittelerwärmungsauslass (56) und der Kühlmittelkühlungsauslass (70) mit einer Ventileinheit (80) gekoppelt sind, wobei die Ventileinheit (80) dafür ausgelegt ist, mindestens eine der Kühlmittelerwärmungsschleife (52) und der Kühlmittelkühlungsschleife (66) selektiv mit mindestens einer der ersten Kühlmittelschleife (12) und der zweiten Kühlmittelschleife (22) in Strömungsverbindung zu setzen oder ihre Strömungsverbindung zu trennen,
**dadurch gekennzeichnet, dass** die erste Kühlmittelschleife (12) und die zweite Kühlmittelschleife (22) über zwei Zwischenschleifenverbindungsleitungen (122, 124) gekoppelt sind.

2. Temperatursteuerungssystem (10) nach Anspruch 1, des Weiteren umfassend eine dritte Kühlmittelschleife (32) mit einem dritten Wärmetauscher (40), der dafür ausgelegt ist, Wärme mit einem dritten Teil des Fahrzeugs zu tauschen, und in Strömungsverbindung zwischen einem dritten Einlass (36) und einem dritten Auslass (38) angeordnet ist, wobei der dritte Einlass (36) und der dritte Auslass (38) mit der Ventileinheit (80) gekoppelt sind, wobei die Ventileinheit (80) dafür ausgelegt ist, die Kühlmittelerwärmungsschleife (52) oder die Kühlmittelkühlungsschleife (66) selektiv mit der dritten Kühlmittelschleife (32) in Strömungsverbindung zu setzen oder ihre Strömungsverbindung zu trennen.

3. Temperatursteuerungssystem (10) nach einem der vorangehenden Ansprüche, des Weiteren umfassend eine Radiatorschleife (42), die dafür ausgelegt ist, Wärme mit einer Umgebung (50) zu tauschen, wobei die Radiatorschleife (42) einen Radiatoreinlass (44), einen Radiatorauslass (46) und einen Kühlmittel-Luft-Wärmetauscher (48) aufweist, der in Strömungsverbindung zwischen dem Radiatoreinlass (44) und dem Radiatorauslass (46) angeordnet ist, wobei mindestens einer des Radiatoreinlasses (44) und des Radiatorauslasses (46) mit mindestens einem der Ventileinheit (80), der ersten Kühlmittelschleife (12), der zweiten Kühlmittelschleife (22) und der dritten Kühlmittelschleife (32) gekoppelt ist.

4. Temperatursteuerungssystem (10) nach einem der vorangehenden Ansprüche, wobei mindestens eine der ersten Kühlmittelschleife (12), der zweiten Kühlmittelschleife (22) und der dritte Kühlmittelschleife (32) eine Umgehungsleitung (86, 90, 94) umfasst, die mindestens einen des ersten Wärmetauschers (20), des zweiten Wärmetauschers (30) und des dritten Wärmetauschers (40) umgeht.

5. Temperatursteuerungssystem (10) nach einem der vorangehenden Ansprüche, wobei mindestens eine der ersten Kühlmittelschleife (12), der zweiten Kühlmittelschleife (22) und der dritten Kühlmittelschleife (32) eine Rezirkulationsleitung (98, 102, 106) zum Rezirkulieren von Kühlmittel durch mindestens einen des ersten Wärmetauschers (20), des zweiten Wärmetauschers (30) und des dritten Wärmetauschers (40) umfasst.

6. Temperatursteuerungssystem (10) nach Anspruch 5, wobei ein Proportionalrezirkulationsventil (100, 104, 108) mit der Rezirkulationsleitung (98, 102, 106) verbunden ist, um einen Kühlmittelstrom in der Rezirkulationsleitung (98, 102, 106) zu steuern.

7. Temperatursteuerungssystem (10) nach einem der vorangehenden Ansprüche, wobei mindestens ein Paar aus der ersten Kühlmittelschleife (12) oder der zweiten Kühlmittelschleife (22) und der dritten Kühlmittelschleife (32) über zwei Zwischenschleifenverbindungsleitungen (130, 132) gekoppelt ist.

8. Temperatursteuerungssystem (10) nach Anspruch 7, wobei ein Proportionalverbindungsventil (126, 128, 134, 136) mit jeder der Zwischenschleifenverbindungsleitungen (122, 124, 130, 132) verbunden ist, um einen Kühlmittelfluss in der jeweiligen Zwischenschleifenverbindungsleitung (122, 124, 130, 132) zu steuern.

9. Temperatursteuerungssystem (10) nach einem der vorangehenden Ansprüche, wobei die Kühlmittelerwärmungsschleife (52) eine elektrische Kühlmittelerwärmungsvorrichtung (64) umfasst.

10. Temperatursteuerungssystem (10) nach einem der vorangehenden Ansprüche, wobei der Verdampfer (74) und der Kondensator (60) Teil eines Wärmepumpenkühlmittelkreislaufs (76) der Wärmepumpeneinheit (62) bilden.

11. Temperatursteuerungssystem (10) nach Anspruch 10, wobei mindestens eine der ersten Kühlmittelschleife (12), der zweiten Kühlmittelschleife (22), der dritten Kühlmittelschleife (32), der Kühlmittelerwärmungsschleife (52) und der Kühlmittelkühlungsschleife (66) mit einem ersten Kühlmittel gefüllt ist und der Wärmepumpenkühlmittelkreislauf (76) mit einem zweiten Kühlmittel gefüllt ist, das von dem ersten Kühlmittel verschieden ist.

12. Temperatursteuerungssystem (10) nach einem der vorangehenden Ansprüche, wobei die Wärmepumpeneinheit (62) eine Kapselung (78) umfasst.

13. Temperatursteuerungssystem (10) nach einem der vorangehenden Ansprüche, wobei mindestens eine der ersten Kühlmittelschleife (12), der zweiten Kühlmittelschleife (22) und der dritten Kühlmittelschleife (32) mindestens eines von einer Antriebssystem-Temperatursteuerungsschleife (14), einer Batteriesystem-Temperatursteuerungsschleife (24) und einer Fahrzeuginnenraum-Temperatursteuerungsschleife (34) ist.

14. Verfahren zum Betreiben eines Temperatursteuerungssystems (10) für ein Fahrzeug nach einem der vorangehenden Ansprüche, umfassend:
Setzen des ersten Einlasses (16) in Strömungsverbindung mit dem Kühlmittelkühlungsauslass (70), Setzen des ersten Auslasses (18) in Strömungsverbindung mit dem Kühlmittelkühlungseinlass (68), Setzen des zweiten Einlasses (26) in Strömungsverbindung mit dem Kühlmittelerwärmungsauslass (56), Setzen des zweiten Auslasses (28) in Strömungsverbindung mit dem Kühlmittelerwärmungseinlass (54) und Übertragen von Wärme von der ersten Kühlmittelschleife (12) zu der zweiten Kühlmittelschleife (22) durch Betreiben der Wärmepumpeneinheit (62) oder
Setzen des ersten Einlasses (16) in Strömungsverbindung mit dem Kühlmittelerwärmungsauslass (56), Setzen des ersten Auslasses (18) in Strömungsverbindung mit dem Kühlmittelerwärmungseinlass (54), Setzen des zweiten Einlasses (26) in Strömungsverbindung mit dem Kühlmittelkühlungsauslass (70), Setzen des zweiten Auslasses (28) in Strömungsverbindung mit dem Kühlmittelkühlungseinlass (68) und Übertragen von Wärme von der zweiten Kühlmittelschleife (22) zu der ersten Kühlmittelschleife (12) durch Betreiben der Wärmepumpeneinheit (62), oder
Setzen der ersten Kühlmittelschleife (12) und der zweiten Kühlmittelschleife (22) in Strömungsverbindung über zwei Zwischenschleifenverbindungsleitungen (122, 124), dergestalt, dass Kühlmittel unterschiedlicher Temperatur zwischen der ersten Kühlmittelschleife (12) und der zweiten Kühlmittelschleife (22) getauscht wird.

## Revendications

1. Système de régulation de température (10) pour un véhicule, comprenant :
une première boucle de liquide de refroidissement (12) avec un premier échangeur de chaleur (20) configuré pour échanger de la chaleur avec une première partie du véhicule et disposé fluidiquement entre une première entrée (16) et une première sortie (18),
une deuxième boucle de liquide de refroidissement (22) avec un deuxième échangeur de chaleur (30) configuré pour échanger de la chaleur avec une deuxième partie du véhicule et disposé fluidiquement entre une deuxième entrée (26) et une deuxième sortie (28),
une boucle de chauffage de liquide de refroidissement (52) avec une portion de conduit (58) couplée thermiquement à un condenseur (60) d'une unité de pompe à chaleur (62) configuré pour chauffer sélectivement le liquide de refroidissement, dans lequel la portion de conduit (58) est disposée fluidiquement entre une entrée de chauffage de liquide de refroidissement (54) et une sortie de chauffage de liquide de refroidissement (56),
une boucle de refroidissement de liquide de refroidissement (66) avec une portion de conduit (72) couplée thermiquement à un évaporateur (74) de l'unité de pompe à chaleur (62) configuré pour refroidir sélectivement le liquide de refroidissement, dans lequel la portion de conduit (72) est disposée fluidiquement entre une entrée de refroidissement de liquide de refroidissement (68) et une sortie de refroidissement de liquide de refroidissement (70),
dans lequel la première entrée (16), la deuxième entrée (26), l'entrée de chauffage de liquide de refroidissement (54), l'entrée de refroidissement de liquide de refroidissement (68), la première sortie (18), la deuxième sortie (28), la sortie de chauffage de liquide de refroidissement (56) et la sortie de refroidissement de liquide de refroidissement (70) sont couplées à une unité de vannes (80), dans lequel l'unité de vannes (80) est configurée pour connecter ou déconnecter sélectivement au moins l'une de la boucle de chauffage de liquide de refroidissement (52) et de la boucle de refroidissement de liquide de refroidissement (66) à au moins l'une de la première boucle de liquide de refroidissement (12) et de la deuxième boucle de liquide de refroidissement (22),
**caractérisé en ce que** la première boucle de liquide de refroidissement (12) et la deuxième boucle de liquide de refroidissement (22) sont couplées par l'intermédiaire de deux conduites de connexion inter-boucles (122, 124).

2. Système de régulation de température (10) selon la revendication 1, comprenant en outre une troisième boucle de liquide de refroidissement (32) avec un troisième échangeur de chaleur (40) configuré pour échanger de la chaleur avec une troisième partie du véhicule et disposé fluidiquement entre une troisième entrée (36) et une troisième sortie (38),
dans lequel la troisième entrée (36) et la troisième sortie (38) sont couplées à l'unité de vannes (80), dans lequel l'unité de vannes (80) est configurée pour connecter ou déconnecter sélectivement la boucle de chauffage de liquide de refroidissement (52) ou la boucle de refroidissement de liquide de refroidissement (66) à la troisième boucle de liquide de refroidissement (32).

3. Système de régulation de température (10) selon l'une quelconque des revendications précédentes, comprenant en outre une boucle de radiateur (42) configurée pour échanger de la chaleur avec un environnement (50), la boucle de radiateur (42) ayant une entrée de radiateur (44), une sortie de radiateur (46) et un échangeur de chaleur liquide de refroidissement-air (48) disposé fluidiquement entre l'entrée de radiateur (44) et la sortie de radiateur (46), dans lequel au moins l'une de l'entrée de radiateur (44) et de la sortie de radiateur (46) est couplée à au moins l'une de l'unité de vannes (80), de la première boucle de liquide de refroidissement (12), de la deuxième boucle de liquide de refroidissement (22) et de la troisième boucle de liquide de refroidissement (32).

4. Système de régulation de température (10) selon l'une quelconque des revendications précédentes, dans lequel au moins l'une des premières boucles de liquide de refroidissement (12), des deuxièmes boucles de liquide de refroidissement (22) et des troisièmes boucles de liquide de refroidissement (32) comprend une conduite de dérivation (86, 90, 94) qui contourne au moins l'un du premier échangeur de chaleur (20), du deuxième échangeur de chaleur (30) et du troisième échangeur de chaleur (40), respectivement.

5. Système de régulation de température (10) selon l'une quelconque des revendications précédentes, dans lequel au moins l'une de la première boucle de liquide de refroidissement (12), de la deuxième boucle de liquide de refroidissement (22) et de la troisième boucle de liquide de refroidissement (32) comprend une conduite de recirculation (98, 102, 106) pour faire recirculer le liquide de refroidissement à travers au moins l'un du premier échangeur de chaleur (20), du deuxième échangeur de chaleur (30) et du troisième échangeur de chaleur (40), respectivement.

6. Système de régulation de température (10) selon la revendication 5, dans lequel une vanne de recirculation proportionnelle (100, 104, 108) est connectée à la conduite de recirculation (98, 102, 106) pour réguler un flux de liquide de refroidissement dans la conduite de recirculation (98, 102, 106).

7. Système de régulation de température (10) selon l'une quelconque des revendications précédentes, dans lequel au moins une paire de la première boucle de liquide de refroidissement (12) ou de la deuxième boucle de liquide de refroidissement (22) et de la troisième boucle de liquide de refroidissement (32) est couplée par l'intermédiaire de deux conduites de connexion inter-boucles (130, 132).

8. Système de régulation de température (10) selon la revendication 7, dans lequel une vanne de connexion proportionnelle (126, 128, 134, 136) est connectée à chacune des conduites de connexion inter-boucles (122, 124, 130, 132) pour réguler un flux de liquide de refroidissement dans la conduite de connexion inter-boucles respective (122, 124, 130, 132).

9. Système de régulation de température (10) selon l'une quelconque des revendications précédentes, dans lequel la boucle de chauffage de liquide de refroidissement (52) comprend un réchauffeur électrique de liquide de refroidissement (64).

10. Système de régulation de température (10) selon l'une quelconque des revendications précédentes, dans lequel l'évaporateur (74) et le condenseur (60) font partie d'un circuit de refroidissement de pompe à chaleur (76) de l'unité de pompe à chaleur (62).

11. Système de régulation de température (10) selon la revendication 10, dans lequel au moins l'une de la première boucle de liquide de refroidissement (12), de la deuxième boucle de liquide de refroidissement (22), de la troisième boucle de liquide de refroidissement (32), de la boucle de chauffage de liquide de refroidissement (52) et de la boucle de refroidissement de liquide de refroidissement (66) est remplie d'un premier liquide de refroidissement et le circuit de liquide de refroidissement de pompe à chaleur (76) est rempli d'un deuxième liquide de refroidissement différent du premier liquide de refroidissement.

12. Système de régulation de température (10) selon l'une quelconque des revendications précédentes, dans lequel l'unité de pompe à chaleur (62) comprend une encapsulation (78) .

13. Système de régulation de température (10) selon l'une quelconque des revendications précédentes, dans lequel au moins l'une de la première boucle de liquide de refroidissement (12), de la deuxième boucle de liquide de refroidissement (22) et de la troisième boucle de liquide de refroidissement (32) est au moins l'une des suivantes : boucle de régulation de température du système d'entraînement (14), boucle de régulation de température du système de batterie (24) et boucle de régulation de température de l'habitacle (34).

14. Procédé de fonctionnement d'un système de régulation de température (10) pour un véhicule selon l'une quelconque des revendications précédentes, comprenant de :
connecter fluidiquement la première entrée (16) à la sortie de refroidissement de liquide de refroidissement (70), la première sortie (18) à l'entrée de refroidissement de liquide de refroidissement (68), la deuxième entrée (26) à la sortie de chauffage de liquide de refroidissement (56), la deuxième sortie (28) à l'entrée de chauffage de liquide de refroidissement (54), et transférer de la chaleur de la première boucle de liquide de refroidissement (12) à la deuxième boucle de liquide de refroidissement (22) en faisant fonctionner l'unité de pompe à chaleur (62), ou
connecter fluidiquement la première entrée (16) à la sortie de chauffage de liquide de refroidissement (56), la première sortie (18) à l'entrée de chauffage de liquide de refroidissement (54), la deuxième entrée (26) à la sortie de refroidissement de liquide de refroidissement (70), la deuxième sortie (28) à l'entrée de refroidissement de liquide de refroidissement (68), et transférer de la chaleur de la deuxième boucle de liquide de refroidissement (22) à la première boucle de liquide de refroidissement (12) en faisant fonctionner l'unité de pompe à chaleur (62), et
connecter fluidiquement la première boucle de liquide de refroidissement (12) et la deuxième boucle de liquide de refroidissement (22) par l'intermédiaire de deux conduites de connexion inter-boucles (122, 124) de sorte que du liquide de refroidissement de température différente soit échangé entre la première boucle de liquide de refroidissement (12) et la deuxième boucle de liquide de refroidissement (22).
